# EUROPÄISCHE PATENTSCHRIFT

(11) **EP 1 783 413 B1**
(45) Veröffentlichungstag und Bekanntmachung des Hinweises auf die Patenterteilung: **12.10.2011**
(21) Anmeldenummer: 06022687.5
(22) Anmeldetag: 31.10.2006
(51) Int. Cl.: F16L 25/00, F16L 33/26

(54) **Anordnung zum Verbinden des Endes eines schraubenlinienförmig gewellten Metallrohres mit einem Anschlussstück**
Arrangement for connecting the ends of a metal pipe with helical corrugations with a connecting piece
Dispositif pour raccorder les bouts d'un tuyau métallique ondulé hélicoïdalement avec un embout

(30) Priorität: 03.11.2005 DE 102005052489
(43) Veröffentlichungstag der Anmeldung: 09.05.2007
(73) Patentinhaber: BRUGG Rohr AG, Holding, 5200 Brugg (CH)
(72) Erfinder: Nielinger, Helga, Dipl.-Ing., 31535 Neustadt (DE)
(74) Vertreter: Scheffler, Jörg

(56) Entgegenhaltungen:
- FR-A- 578 801
- FR-A- 1 286 787
- FR-E- 30 966
- US-A- 2 503 169

## Beschreibung

Die Erfindung betrifft eine Anordnung zum Verbinden des Endes eines schraubenlinienförmig gewellten Metallrohres mit einem Anschlussstück, bei welchem Auf das Ende des Metallrohres eine Spannmutter mit einem der Wellform des Metallrohres angepassten Innengewinde soweit aufgeschraubt ist, dass zumindest vier Wellengänge des Metallrohres freiliegen, auf das Ende des Metallrohres ein ringförmiges Dichtungselement aus elastisch oder plastisch verformbaren Werkstoff mit einem der Wellform des Metallrohres angepasstem Innengewinde aufgeschraubt ist und die Spannmutter und das Anschlussstück mittel einer Überwurfmutter miteinander in axialer Richtung verspannt sind.

Eine solche Anordnung ist aus der FR 578 801 bekannt.

Weiterhin ist aus der EP 0 775 865 B1 eine Anordnung zum Verbinden des Endes eines schraubenlinienförmig gewellten Metallrohres mit einem Anschlussstück bekannt, bei welcher in das Ende des gewellten Rohres ein Stützring eingeschraubt ist und auf das Ende des gewellten Rohres ein Druckring aufgeschraubt ist. Das Anschlussstück ist nach Art einer Flanschverbindung über Schraubbolzen mit dem Druckring verbunden.

Zwischen dem Druckring, dem Ende des Anschlussstücks und dem aus dem Druckring herausragenden Ende des gewellten Rohres ist eine Kammer gebildet, in welcher eine Dichtung aus Graphit vorgesehen ist, die beim löngsaxialen Verspannen des Druckrings und des Anschlussstücks mittels Schraubbolzen in radialer Richtung verformt wird und das Ende des gewellten Rohres gegenüber dem Anschlussstück abdichtet.

Eine Weiterbildung dieser Anordnung ist aus der DE-U-20 2004 007 321 bekannt, bei welcher ein Dichtungsring aus Graphit eingesetzt wird, der eine innere der Form der Wellung des Metallrohres angepasste Profilierung aufweist und somit auf das Ende des Wellrohres aufgeschraubt werden kann.

Aus der JP 2001-082646 ist eine Anordnung der eingangs erwähnten Art bekannt, bei der ein Dichtring aus Gummi eingesetzt wird, welcher in radialer Richtung durchtrennt ist und von der Seite her auf das gewellte Rohr in ein Wellental eingelegt werden kann.

Eine ähnliche Anordnung zeigt die BE 496466, bei der ein verformbarer Dichtring mit einer der Kontur des Wellrohres angepassten Profilierung auf das Wellrohrende aufgeschraubt wird. Der Dichtring kann eine konisch verlaufend äußere Oberfläche aufweisen, so dass er durch eine ebenfalls konisch verlaufende Innenfläche des Anschlussstücks bei dessen längsaxialer Bewegung radial nach innen verformt wird.

Der Erfindung liegt die Aufgabe zugrunde, eine Anordnung der eingangs erwähnten Art bereitzustellen, welche leicht zu montieren ist und ohne großen Kraftaufwand eine Abdichtung zwischen dem Wellrohr und dem Anschlussstück ermöglicht, welche einen Druck von mehr als 25 bar dauerhaft standhält. Insbesondere soll die Anordnung auch bei einem Gasdruck von mehr als 25 bar einsetzbar sein.

Diese Aufgabe wird durch die Merkmale des Anspruchs 1 gelöst.

Weitere vorteilhafte Ausgestaltungen der Erfindung sind in den Unteransprüchen erfaßt.

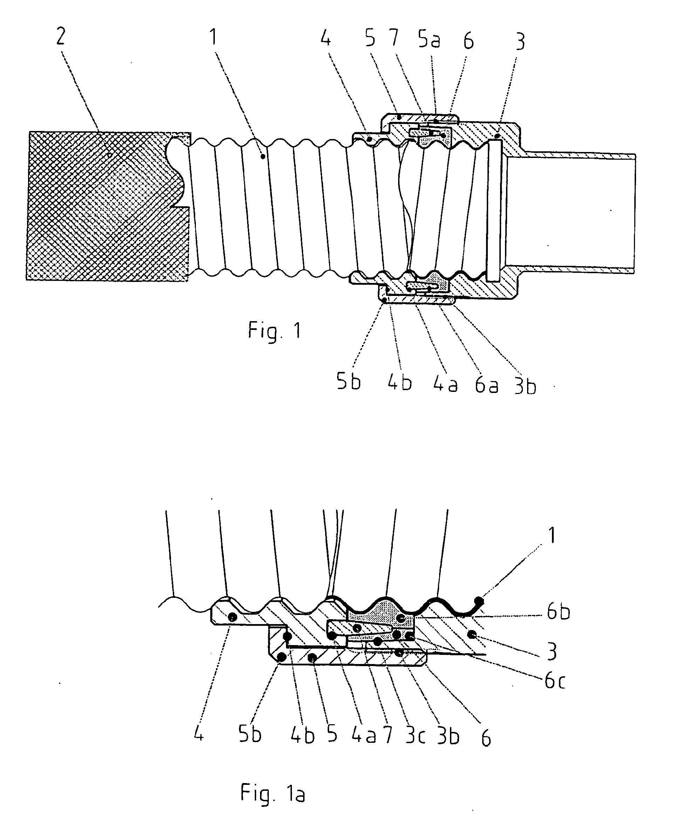

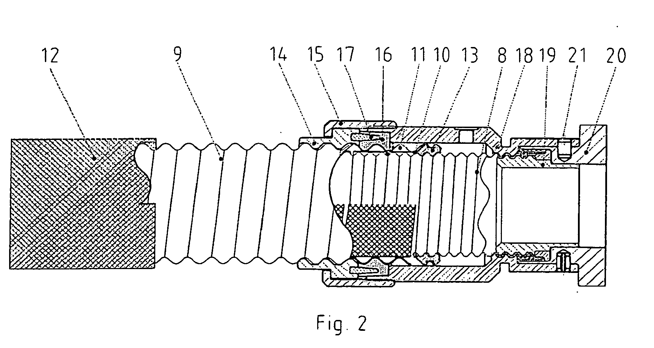

Die Erfindung ist anhand der in den Figuren 1, 1a und 2 schematisch dargestellten Ausführungsbeispiele näher erläutert.

In der Figur 1 ist ein schraubenlinienförmig gewelltes Metallrohr 1, vorzugsweise aus rostfreiem Stahl dargestellt, welches mit einem Mantel 2 aus Kunststoff vorzugsweise Polyethylen versehen ist.

Auf das Ende des gewellten Metallrohres 1 ist ein Anschlussstück 3 aufgeschraubt, welches aus Metall, vorzugsweise aus rostfreiem Stahl besteht. An das Ende des Anschlussstücks 3 können in für den Rohrbauer geläufiger Weise Glattrohrenden, Rohrflansche etc. angelötet, angeschweißt oder angeschraubt werden.

Zur Herstellung einer Anschlussverbindung geht man wie folgt vor: zunächst wird auf das Ende des Metallrohres 1 eine Spannmutter 4 gemeinsam mit einer Überwurfmutter 5 aufgeschraubt.

Sodann wird ein Dichtring 6 aus Gummi auf das Ende des Metallrohres 1 aufgeschraubt. Der Dichtring 6 weist eine in Umfangsrichtung verlaufende Ringnut 6a auf, in welcher ein Spreizring 7 befindlich ist. Der Spreizring 7 hat einen keilförmigen Querschnitt. Beim Aufschrauben des Dichtrings 6 dringt das aus der Ringnut 6a vorspringende Ende des Spreizrings 7 in eine Ausnehmung 4a der Spannmutter 4 ein. Nun wird das Anschlussstück 3 soweit auf das Ende des Metallrohres 1 aufgeschraubt, bis es die Stirnfläche des Dichtrings 6 berührt.

Zum Abschluss wird die Überwurfmutter 5 auf das Anschlussstück 3 aufgeschraubt. Hierzu weisen die Überwurfmutter 5 ein Innengewinde 5a und das Anschlussstück 3 ein Außengewinde 3b auf.

Die Überwurfmutter 5 stützt sich mit einem radial nach innen gerichteten Ansatz 5b an der dem Ende des Metallrohres 1 abgekehrten Seite befindlichen Stirnfläche 4b der Spannmutter 4 ab, so dass beim Aufschrauben der Überwurfmutter das Anschlussstück 3 der Spannmutter 4 angenähert wird. Dabei wird die Wellung des Metallrohres 1 im Bereich des Dichtrings 6 etwas gestaucht und der Dichtring 6 in radialer Richtung verformt, so dass er sich sowohl an das Metallrohr 1 als auch an den Ansatz 3c des Anschlussstücks 3 anpresst.

Eine nach der Lehre der Erfindung hergestellte Anordnung gewährleistet eine hohe Dichtheit bei geringem Kraftaufwand. Sie ist demontierbar und kann auch von nicht fachmännisch ausgebildetem Personal montiert werden. Da sie ohne offene Flamme (Löten) herstellbar ist, kann sie in explosionsgeschützten Bereichen eingesetzt werden.

Figur 1a zeigt eine Anordnung, bei welcher der Dichtring 6 aus zwei konzentrischen Ringteilen 6b und 6c besteht. Der Spreizring 7 ist zwischen den Ringteilen 6b und 6c angeordnet und weitet beim Aufschrauben der Überwurfmutter auf das Anschlussstück 3 den Spalt zwischen den Ringteilen 6b und 6c auf.

Eine besonders vorteilhafte Ausführungsform der Erfindung ist in der Figur 2 dargestellt.

Dort ist ein überwachbares Leitungsrohr dargestellt, welches aus zwei konzentrischen gewellten Metallrohren 8 und 9 sowie einer auf dem Innenrohr 8 angeordneten Armierungslage 10 besteht. Zwischen dem Innenrohr 8 und dem Außenrohr 9 befindet sich ein Überwachungsraum 11. Ein solches Leitungsrohr ist unter dem Handelsnamen Flexwell-Sicherheitsleitung auf dem Markt und wird vornehmlich für den Transport von umweltgefährdenden Medien eingesetzt. Mit 12 ist noch ein auf dem Außenrohr 9 befindlicher Kunststoffmantel bezeichnet.

Nach dem Absetzen des Kunststoffmantels 12 und des Außenrohres 9 sowie der Armierung 10 wird auf das Innenrohr 8 ein Klemmring 13 unter die Armierung 10 geschraubt und die Armierung 10 auf dem Klemmring 13 fixiert.

Die Abdichtung des Überwachungsraumes 11 erfolgt zunächst durch Aufschrauben der Spannmutter 14 gemeinsam mit der Überwurfmutter 15, des Dichtrings 16 mit dem Spreizkeil 17 auf das Außenrohr 9 wie anhand des Beispiels nach Figur 1 beschrieben. Sodann wird ein Druckring 18 auf das Innenrohr 8 aufgeschraubt und darauf wird eine Stützbuchse 19 in das Ende des Innenrohres 8 eingeschraubt und dann das Anschlussstück 20 auf das Ende des Innenrohres 8 aufgeschoben. Die Abdichtung des Innenrohres 8 gegenüber dem Überwachungsraum 11 und der Umgebung erfolgt nach Art der in der EP 0 775 865 B1 beschriebenen Anordnung durch längsaxiales Verpressen. Der Zustand nach dem Verpressen wird durch Stifte 21 fixiert. Durch Aufschrauben der Überwurfmutter 15 auf den der Spannmutter 14 benachbarten Bereich des Anschlussstücks 20 wird der Dichtring wie im Beispiel nach Figur 1 beschrieben in radialer Richtung verformt.

## Patentansprüche

1. Anordnung, umfassend ein schrauben Linienförmig gewelltes Metallrohr (1), ein Anschlussstück (3), eine Spannmutter (4), ein ringförmiges Dichtungselement (6) und eine Überwurf mutter (5), zum Verbinden des Endes des schraubenlinienförmig gewellten Metallrohres (1) mit dem Anschlussstück (3), bei welcher auf das Ende des Metallrohres (1) die Spannmutter (4) mit einem der Wellform des Metallrohres (1) angepassten innengewinde soweit aufgeschraubt ist dass zumindest vier Wellengänge des Metallrohres (1) freiliegen, auf das Ende des Metallrohres (1) das ringförmige Dichtungselement (6) aus elastisch oder plastisch verformbarem Werkstoff mit einem der Wellform des Metallrohres (1) angepassten Innengewinde aufgeschraubt ist und die Spannmutter (4) und das Anschlussstück (3) mittels der Überwurfmutter (5) miteinander in axialer Richtung verspannt sind, **dadurch gekennzeichnet, dass** die Anordnung ein ringförmiges Element (7) mit keilförmigem Querschnitt umfasst, dass das Dichtungselement soweit auf das Ende des Metallrohrs aufgeschraubt ist, dass zumindest zwei Wellengönge des Metallrohres (1) freiliegen, dass auf das Ende des Metallrohres (1) das Anschlussstück (3) mit einem dem Wellrohrende zugekehrten Ende, welches ein der Wellform angepasstes Innengewinde aufweist, aufgeschraubt ist, und dass das Dichtungselement (6) an zumindest einer seiner Stirnflächen eine Ringnut (6a) aufweist, in welche das ringförmige Element (7) mit keilförmigem Querschnitt eindringt oder das Dichtungselement (6) aus zwei konzentrischen Ringelementen (6b,6c) besteht, zwischen deren Berührungsflächen das ringförmigen Element (7) eindringt.

2. Anordnung noch Anspruch 1, **dadurch gekennzeichnet, dass** an der dem Wellrohrende zugekehrten Stirnseite der Spannmutter (4) eine Ringnut (4a) zur Aufnahme des ringförmigen Elementes (7) vorgesehen ist.

3. Anordnung nach Anspruch 1 oder 2, **dadurch gekennzeichnet, dass** das Anschlussstück (3) an seinem mit dem Innengewinde versehenen Ende einen das Dichtungselement (6) übergreifenden Ansatz (3c) aufweist.

4. Anordnung nach einem der Ansprüche 1 bis 3, **dadurch gekennzeichnet, dass** die Überwurfmutter (5) an ihrem dem Wellrohrende abgekehrten Ende einen radial nach innen gerichteten Ansatz (5b) aufweist, welcher an einer dem Wellrohrende abgekehrten Ende der Spannmutter (4) vorgesehenen Stirnfläche (4a) angreift und mittels eines Innengewindes (5a) auf ein Außengewinde (3b) des Anschlussstücks (3) aufgeschraubt ist.

5. Anordnung nach einem der Ansprüche 1 bis 4, **dadurch gekennzeichnet, dass** das Dichtungselement (6) aus Gummi besteht.

6. Anordnung nach einem der Ansprüche 1 bis 5, **dadurch gekennzeichnet, dass** die Oberfläche des ringförmigen Elements (7) mit einem Gleitmittel beschichtet ist.

## Claims

1. Arrangement, comprising a helically corrugated metal pipe (1), a connecting piece (3) a clamping nut (4), an annular sealing element (6) and a union nut (5), for connecting the end of the helically corrugated metal pipe (1) to the connecting piece (3), in which the clamping nut (4) is screwed by an internal thread adapted to the corrugated form of the metal pipe (1) onto the end of the metal pipe (1) to the extent that at least four corrugations of the metal pipe (1) are exposed, the annular sealing element (6) of elastically or plastically deformable material is screwed by an internal thread adapted to the corrugated form of the metal pipe (1) onto the end of the metal pipe (1) and the clamping nut (4) and the connecting piece (3) are braced with each other in the axial direction by means of the union nut (5), **characterized in that** the arrangement comprises an annular element (7) with a wedge-shaped cross section, **in that** the sealing element is screwed onto the end of the metal pipe to the extent that at least two corrugations of the metal pipe (1) are exposed, **in that** the connecting piece (3) is screwed by an end, which faces the end of the corrugated pipe and which has an internal thread adapted to the corrugated form, onto the end of the metal pipe (1), and **in that** the sealing element (6) has on at least one of its end faces an annular groove (6a) into which the annular element (7) with the wedge-shaped cross section penetrates or the sealing element (6) consists of two concentric ring elements (6b, 6c), between the contacting areas of which the annular element (7) penetrates.

2. Arrangement according to Claim 1, **characterized in that** an annular groove (4a) for receiving the annular element (7) is provided on the end face of the clamping nut (4) that is facing the end of the corrugated pipe.

3. Arrangement according to Claim 1 or 2, **characterized in that** the connecting piece (3) has at its end provided with the internal thread an extension (3c) reaching over the sealing element (6).

4. Arrangement according to one of Claims 1 to 3, **characterized in that** the union nut (5) has at its end facing away from the end of the corrugated pipe a radially inwardly directed extension (5b), which acts on an end face (4a) provided on an end of the clamping nut (4) that is facing away from the end of the corrugated pipe and is screwed by means of an internal thread (5a) onto an external thread (3b) of the connecting piece (3).

5. Arrangement according to one of Claims 1 to 4, **characterized in that** the sealing element (6) consists of rubber.

6. Arrangement according to one of Claims 1 to 5, **characterized in that** the surface of the annular element (7) is coated with a lubricant.

## Revendications

1. Agencement comprenant un tube métallique ondulé en hélice (1), un embout de raccordement (3), un écrou de serrage (4), un élément d'étanchéité annulaire (6) et un écrou d'accouplement (5), pour connecter l'extrémité du tube métallique ondulé en hélice (1) à l'embout de raccordement (3), dans lequel sur l'extrémité du tube métallique (1), l'écrou de serrage (4) est vissé avec un filetage intérieur adapté à la forme ondulée du tube métallique (1) dans une mesure telle qu'au moins quatre pas d'ondulations du tube métallique (1) soient exposés, sur l'extrémité du tube métallique (1), l'élément d'étanchéité annulaire (6) en matériau déformable élastiquement ou plastiquement est vissé avec un filetage intérieur adapté à la forme ondulée du tube métallique (1), et l'écrou de serrage (4) et l'embout de raccordement (3) sont serrés l'un contre l'autre dans la direction axiale au moyen de l'écrou d'accouplement (5), **caractérisé en ce que** l'agencement comprend un élément annulaire (7) de section transversale en forme de clavette, **en ce que** l'élément d'étanchéité est vissé sur l'extrémité du tube métallique dans une mesure telle qu'au moins deux pas d'ondulations du tube métallique (1) soient exposés, **en ce que** sur l'extrémité du tube métallique (1), l'embout de raccordement (3) est vissé avec une extrémité tournée vers l'extrémité du tube ondulé, qui présente un filetage intérieur adapté à la forme ondulée, et **en ce que** l'élément d'étanchéité (6) présente sur au moins l'une de ses faces frontales une rainure annulaire (6a) dans laquelle pénètre l'élément annulaire (7) de section transversale en forme de clavette, ou l'élément d'étanchéité (6) se compose de deux éléments annulaires concentriques (6b, 6c), entre les surfaces de contact desquels pénètre l'élément annulaire (7).

2. Agencement selon la revendication 1, **caractérisé en ce que** sur le côté frontal de l'écrou de serrage (4) tourné vers l'extrémité du tube ondulé est prévue une rainure annulaire (4a) pour recevoir l'élément annulaire (7).

3. Agencement selon la revendication 1 ou 2, **caractérisé en ce que** l'embout de raccordement (3) présente, sur son extrémité pourvue du filetage intérieur, une saillie (3c) venant en prise par le dessus avec l'élément d'étanchéité (6).

4. Agencement selon l'une quelconque des revendications 1 à 3, **caractérisé en ce que** l'écrou d'accouplement (5) présente, sur son extrémité opposée à l'extrémité du tube ondulé, une saillie (5b) orientée radialement vers l'intérieur, qui vient en prise sur une surface frontale (4a) prévue à une extrémité de l'écrou de serrage (4) opposée à l'extrémité du tube ondulé, et qui est vissée au moyen d'un filetage intérieur (5a) sur un filetage extérieur (3b) de l'embout de raccordement (3).

5. Agencement selon l'une quelconque des revendications 1 à 4, **caractérisé en ce que** l'élément d'étanchéité (6) se compose de caoutchouc.

6. Agencement selon l'une quelconque des revendications 1 à 5, **caractérisé en ce que** la surface de l'élément annulaire (7) est revêtue d'un moyen glissant.
